# EUROPEAN PATENT APPLICATION

(11) **EP 4 723 547 A2**
(43) Date of publication of application: **08.04.2026**
(21) Application number: 26159874.2
(22) Date of filing: 21.09.2023
(51) Int. Cl.: H04L 9/32

(54) **KEY REPLACEMENT IN A COMMUNICATION DEVICE**

(62) Divisional of application: 23916482.5
(71) Applicant: Telefonaktiebolaget LM Ericsson (publ), 164 83 Stockholm (SE)
(72) Inventor: Ståhl, Per, 218 51 Klagshamn (SE); Fjelkner, Bo, 181 56 Lidingö (SE); Smeets, Bernard, 247 51 Dalby (SE)
(74) Representative: Ericsson

(57) **Abstract**

There is provided techniques for key replacement in a communication device (100). A method is performed by the communication device (100). The method comprises receiving (S104) a trigger for the communication device (100) to perform the key replacement. The method comprises providing (106) a request to a DI wallet entity (200) for a verifiable presentation for the communication device (100) to perform the key replacement. The method comprises receiving (S108) the verifiable presentation from the DI wallet entity (200). The verifiable presentation comprises attributes of one or more verifiable credentials. The method comprises obtaining (S110) a new key pair, and replacing an existing key pair with the new key pair upon the communication device (100) having successfully verified the verifiable presentation. The method comprises communicating (S116) with an SP entity (300). The new key pair is used as part of the communication device (100) communicating with the SP entity (300).

## Description

### TECHNICAL FIELD

Embodiments presented herein relate to methods, a communication device, a digital identity wallet entity, a service provider entity, a system, computer programs, and a computer program product for key replacement in the communication device.

### BACKGROUND

Some communication devices are equipped with at least one identity for use in identification and authentication and for secure communication to be established with the communication device. In many cases, such an identity is based on an asymmetric key pair, where the private part (so-called private key) is kept secret by the communication device and the public part (so-called public key) is made publicly available, often as part of a certificate, for use by entities in identification and authentication of the communication device. In this context, elliptic curve based key pairs are often used. Further, the communication device might comprise a secure environment for managing the identity of the communication device, for example ensuring secure storage of the secret parts of the device identity. For example, the secure environment may be a secure element (SE), leverage some type of universal integrated circuit card (UICC), if such exists at the communication device, or be realized as a hardware-based Trusted Execution Environment (TEE) e.g., based on Intel SGX or ARM TrustZone technology.

There are many different ways to provision identities to communication devices. For example, the identity may be installed at manufacturing of the communication device or there may be a bootstrap procedure where an identity, or keys, installed at manufacturing is used to secure the bootstrap procedure and the provisioning of a new identity for use during the operational phase by the communication device. An example of this is the Open Mobile Alliance (OMA) lightweight machine-to-machine (LwM2M) communication protocol, as specified in OMASpecWorks, "Lightweight Machine to Machine Technical Specification: Core, Approved Version 1.2.1, OMA-TS-LightweightM2M_Core-V1_2_1-20221209-A", and OMASpecWorks, "Lightweight Machine to Machine Technical Specification: Transport Bindings, Approved Version 1.2.1, OMA-TS-LightweightM2M_ Transport-V1_2_1-20221209-A". As such, the provisioned identity is typically under control of the manufacturer of the communication device or the service provider that often also provides, or sells, the communication device to the end-user.

Methods for provisioning of identities for communication devices often involve the use of a public key infrastructure (PKI), where keys and certificates need to be provisioned to the secure element, UICC, and/or TEE of the communication device, for example, during manufacturing of the communication device. This is often a very complex procedure.

Further, one single natural person or enterprise may have several communication devices, such as Internet of Things (IoT) devices with sensors providing data for various services used by the natural person or enterprise. This also complicates the procedure of provisioning the communication devices with identities.

In existing technology leveraging PKI for communication devices, the process of inserting and managing the keys and certificates into the secure element or hardware-based trusted execution environment, such as TEE, of the communication devices, e.g., during development and manufacturing process, is problematic. The requirements to provision PKI at the manufacturing level are also difficult to implement, particularly with respect to such PKI requirements as revocation, potential auditing, and the manufacturer's ability or inability to share certificate authority (CA) keys.

These difficulties increase significantly where an electronic device is manufactured using a secure element from a different manufacturer, when multiple secure elements are implemented within a single communication device, and/or when a communication device or its secure element are provisioned and registered in more than one type of communication system. In particular, many conventional communication devices may be deployed in more than one type of communication system (e.g., Open Connectivity Foundation (OCF), Nest/Thread, Zigbee, etc.), and a different key may have to be inserted in the communication device at the time of manufacture for each communication system where deployment is desired. Accordingly, it is desirable to develop a simplified provisioning and registration approach for manufacturers and for cross-manufacturer support.

According to conventional manufacturing processes, because each customer's certificate profile and policies are unique, the manufacturer must individually track each customer as a unique part number, even though the particular cryptographic authentication and its derivatives may be standard products. Accordingly, implementation of secure elements within communication devices can typically result in thousands of part numbers for tracking each customer, which is costly and not considered to be manageable in the long term.

On the security infrastructure side, PKI-based authentication is able to provide strong cryptographic techniques for establishing verifiable device identities, and also for managing these identities on an ongoing basis. However, the process of setting up a PKI requires detailed knowledge of cryptography and security methodologies and is quite costly to implement and to maintain for each individual communication device.

Accordingly, there is a need for a significantly simplified and more cost-effective technique for securely provisioning communication devices and/or the secure elements or hardware-based trusted execution environment provided therein.

Further accordingly, there is a need to simplify the provisioning process without sacrificing security features, nor requiring the need to use highly sophisticated cybersecurity technology.

### SUMMARY

An object of embodiments herein is to enable provisioning of identities for communication devices that does require PKI.

In existing technologies the device identity is not under the control of the natural person owning the communication device. It is the manufacturer or service provider that handles and manages the identity of the communication device. This means that the owner of the communication device relies on the manufacturer, or service provider for securely handling the identity.

A particular object is therefore to provide provisioning of identities for communication devices where the device identity is enabled to be under the control of the person owning the communication device.

According to a first aspect there is presented a method for key replacement in a communication device. The method is performed by the communication device. The method comprises receiving a trigger for the communication device to perform the key replacement. The method comprises providing a request to a digital identity (DI) wallet entity for a verifiable presentation for the communication device to perform the key replacement. The method comprises receiving the verifiable presentation from the DI wallet entity. The verifiable presentation comprises attributes of one or more verifiable credentials. The method comprises obtaining a new key pair, and replacing an existing key pair with the new key pair upon the communication device having successfully verified the verifiable presentation. The method comprises communicating with a service provider (SP) entity. The new key pair is used as part of the communication device communicating with the SP entity.

According to a second aspect there is presented a communication device for key replacement. The communication device comprises processing circuitry. The processing circuitry is configured to cause the communication device to receive a trigger for the communication device to perform the key replacement. The processing circuitry is configured to cause the communication device to provide a request to a DI wallet entity for a verifiable presentation for the communication device to perform the key replacement. The processing circuitry is configured to cause the communication device to receive the verifiable presentation from the DI wallet entity. The verifiable presentation comprises attributes of one or more verifiable credentials. The processing circuitry is configured to cause the communication device to obtain a new key pair, and replacing an existing key pair with the new key pair upon the communication device having successfully verified the verifiable presentation. The processing circuitry is configured to cause the communication device to communicate with an SP entity. The new key pair is used as part of the communication device communicating with the SP entity.

According to a third aspect there is presented a computer program for key replacement in a communication device, the computer program comprising computer program code which, when run on processing circuitry of a communication device, causes the communication device to perform actions. One action comprises the communication device to receive a trigger for the communication device to perform the key replacement. One action comprises the communication device to provide a request to a DI wallet entity for a verifiable presentation for the communication device to perform the key replacement. One action comprises the communication device to receive the verifiable presentation from the DI wallet entity. The verifiable presentation comprises attributes of one or more verifiable credentials. One action comprises the communication device to obtain a new key pair, and replacing an existing key pair with the new key pair upon the communication device having successfully verified the verifiable presentation. One action comprises the communication device to communicate with an SP entity. The new key pair is used as part of the communication device communicating with the SP entity.

According to a fourth aspect there is presented a method for key replacement in a communication device. The method is performed by a DI wallet entity. The method comprises receiving one or more verifiable credentials from a Trust Service Provider (TSP) entity. The method comprises receiving a request from the communication device for a verifiable presentation for the communication device to perform the key replacement of a key pair. The method comprises sending a verifiable presentation comprises attributes of the verifiable credentials to the communication device. The method comprises reporting successful key replacement of the key pair with a new key pair and sending a new public key of the new key pair to the SP entity.

According to a fifth aspect there is presented a DI wallet entity for key replacement in a communication device. The DI wallet entity comprises processing circuitry. The processing circuitry is configured to cause the DI wallet entity to receive one or more verifiable credentials from a TSP entity. The processing circuitry is configured to cause the DI wallet entity to receive a request from the communication device for a verifiable presentation for the communication device to perform the key replacement of a key pair. The processing circuitry is configured to cause the DI wallet entity to send a verifiable presentation comprises attributes of the verifiable credentials to the communication device. The processing circuitry is configured to cause the DI wallet entity to report successful key replacement of the key pair with a new key pair and sending a new public key of the new key pair to the SP entity.

According to a sixth aspect there is presented a computer program for key replacement in a communication device, the computer program comprising computer program code which, when run on processing circuitry of a DI wallet entity, causes the DI wallet entity to perform actions. One action comprises the DI wallet entity to receive one or more verifiable credentials from a TSP entity. One action comprises the DI wallet entity to receive a request from the communication device for a verifiable presentation for the communication device to perform the key replacement of a key pair. One action comprises the DI wallet entity to send a verifiable presentation comprises attributes of the verifiable credentials to the communication device. One action comprises the DI wallet entity to report successful key replacement of the key pair with a new key pair and sending a new public key of the new key pair to the SP entity.

According to a seventh aspect there is presented a method for key replacement in a communication device. The method is performed by an SP entity. The method comprises receiving a report of successful key replacement of a key pair at the communication device and a new public key of the key pair from a DI wallet entity. The method comprises replacing a public key of a key pair at the SP entity with the new public key. The method comprises communicating with the communication device. The new public key is used as part of the SP entity communicating with the communication device.

According to an eighth aspect there is presented an SP entity for key replacement in a communication device. The SP entity comprises processing circuitry. The processing circuitry is configured to cause the SP entity to receive a report of successful key replacement of a key pair at the communication device and a new public key of the key pair from a DI wallet entity. The processing circuitry is configured to cause the SP entity to replace a public key of a key pair at the SP entity with the new public key. The processing circuitry is configured to cause the SP entity to communicate with the communication device. The new public key is used as part of the SP entity communicating with the communication device.

According to a ninth aspect there is presented a computer program for key replacement in a communication device, the computer program comprising computer program code which, when run on processing circuitry of an SP entity, causes the SP entity to perform actions. One action comprises the SP entity to receive a report of successful key replacement of a key pair at the communication device and a new public key of the key pair from a DI wallet entity. One action comprises the SP entity to replace a public key of a key pair at the SP entity with the new public key. One action comprises the SP entity to communicate with the communication device. The new public key is used as part of the SP entity communicating with the communication device.

According to a tenth aspect there is presented a computer program product comprising a computer program according to at least one of the third aspect, the sixth aspect, and the ninth aspect and a computer readable storage medium on which the computer program is stored. The computer readable storage medium can be a non-transitory computer readable storage medium.

According to an eleventh aspect there is presented a system comprising a communication device according to the second aspect, a DI wallet entity according to the fifth aspect, and an SP entity according to the eighth aspect.

Advantageously, these aspects provide provisioning of identities for communication devices where the device identity is enabled to be under the control of the natural person owning the communication device.

Advantageously, given that a natural person in control of the DI wallet entity provides information to the communication device, privacy-by-design is built into the process by default. The DI wallet entity is granted the right to install a new key pair, which in some embodiments is generated in a secure way in the DI wallet entity, into the communication device. A key pair, and keys derived from this key pair, that then can be used for authentication purposes and to encrypt data both in transit and rest.

Advantageously, given that the new key pair is installed in the communication device only in the final phase of provisioning a service to the communication device, the key management process in all earlier stages, including the manufacturing of the communication device, can be simplified, e.g., by avoiding the use of PKI in the manufacturing of the communication device.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a system according to embodiments;
Figs. 2 and 3 are signalling diagrams according to embodiments;
Figs. 4, 5, and 6 are flowcharts of methods according to embodiments;
Figs. 7, 8, and 9 are signalling diagrams according to embodiments;
Fig. 10 is a schematic diagram showing functional units of a communication device according to an embodiment;
Fig. 11 is a schematic diagram showing functional modules of a communication device according to an embodiment;
Fig. 12 is a schematic diagram showing functional units of a DI wallet entity according to an embodiment;
Fig. 13 is a schematic diagram showing functional modules of a DI wallet entity according to an embodiment;
Fig. 14 is a schematic diagram showing functional units of an SP entity according to an embodiment;
Fig. 15 is a schematic diagram showing functional modules of an SP entity according to an embodiment; and
Fig. 16 shows one example of a computer program product comprising computer readable means according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

The wording that a certain data item, piece of information, etc. is obtained by a first entity should be construed as that data item or piece of information being retrieved, fetched, received, or otherwise made available to the first entity. For example, the data item or piece of information might either be pushed to the first entity from a second entity or pulled by the first entity from the second entity. Further, in order for the first entity to obtain the data item or piece of information, the first entity might be configured to perform a series of operations, possible including interaction with the second entity. Such operations, or interactions, might involve a message exchange comprising any of a request message for the data item or piece of information, a response message comprising the data item or piece of information, and an acknowledge message of the data item or piece of information. The request message might be omitted if the data item or piece of information is neither explicitly nor implicitly requested by the first entity.

The wording that a certain data item, piece of information, etc. is provided by a first entity to a second entity should be construed as that data item or piece of information being sent or otherwise made available to the second entity by the first entity. For example, the data item or piece of information might either be pushed to the second entity from the first entity or pulled by the second entity from the first entity. Further, in order for the first entity to provide the data item or piece of information to the second entity, the first entity and the second entity might be configured to perform a series of operations in order to interact with each other. Such operations, or interaction, might involve a message exchange comprising any of a request message for the data item or piece of information, a response message comprising the data item or piece of information, and an acknowledge message of the data item or piece of information. The request message might be omitted if the data item or piece of information is neither explicitly nor implicitly requested by the second entity.

As noted above, there is a need for a significantly simplified and more cost-effective technique for securely provisioning communication devices and/or the secure elements or hardware-based trusted execution environment provided therein, and to simplify the provisioning process without sacrificing security features, nor requiring the need to use highly sophisticated cybersecurity technology.

At least some of the herein disclosed embodiments are based on using Digital Identity (DI) Wallet of a natural person (NP) to securely generate and provision an identity for a communication device belonging to an enterprise or a natural person (e.g., representing a legal entity). At least some of the herein disclosed embodiments are based on using the support for electronic attestation of attributes, or Verifiable Credentials, in the DI Wallet where a Verifiable Credential is issued to the DI Wallet (or to the NP owning the DI Wallet) granting the DI Wallet (or NP with the help of the DI Wallet) the right to install a new key pair in the communication device. At least some of the herein disclosed embodiments are based on using a Verifiable Presentation to present the Verifiable Credential (or part thereof) to the communication device. In some examples, a generated key pair is provided to the communication device as part of the Verifiable Presentation.

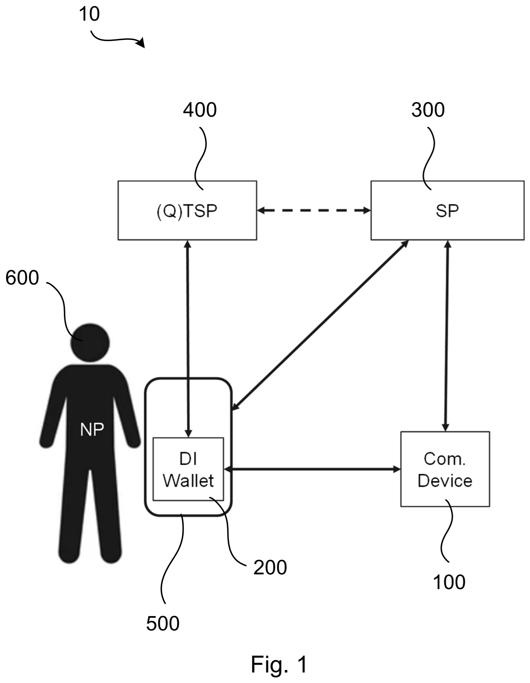

Fig. 1 is a schematic diagram illustrating a system 10 where embodiments presented herein can be applied. The system 10 comprises a communication device 100, a DI wallet entity 200, an SP entity 300, and a (Qualified) Trust Service Provider (Q)TSP entity 400. Further aspects of these entities will be disclosed in further detail next.

The communication device 100 might be an IoT device, a networked-equipped sensor device, a network-equipped vehicle, a network-equipped gaming control, a user equipment UE, a smartphone, a laptop computer, or a tablet computer. The communication device 100 might be configured with a secure environment for managing the identity of the communication device 100. The secure environment comprises secure storage for the secret parts of the identity of the communication device 100. For example, the communication device 100 might comprise a secure element (SE), an embedded secure element (eSE), or an integrated secure element (iSE) for this purpose. Alternatively, the secure environment might leverage an UICC (SIM card), eUICC (eSIM), or iUICC (iSIM) (e.g., ieUICC) for this purpose. The secure environment might be realized as a hardware-based Trusted Execution Environment (TEE). The communication device 100 might be configured to support at least one of the following protocols for receiving and verifying Verifiable Presentation of attributes of Verifiable Credentials ((Q)EAAs, see below): ISO/IEC 18013-5 and/or ISO/IEC 18013-7 with data model from ISO/IEC 18013-5, Open ID for Verifiable Presentation (OpenID4VP) with a W3C data model. The communication device 100 might be configured to support the use of Verifiable Presentations involving Verifiable Credentials granting identity/keys replacement for the communication device 100. The communication device 100 might be configured to support one or more communication protocols for interacting with other entities in the system 10. For this purpose, the communication device 100 might be provided with a communication interface supporting any, or any combination of, near-field communication (NFC), Bluetooth low-energy communication, WiFi communication, or wireless cellular communication.

The DI wallet entity 200 is illustrated as being comprised in a device 500 that belongs to a natural person (NP) 600. For example, the device 500 might be a mobile phone, a tablet computer, a laptop computer, or the like. In general terms, the DI wallet entity 200 can be regarded as hardware which comprises a DI wallet in the form of software. An example is a processor which comprises a DI wallet application in the device 500. In this respect, the hardware that comprises the DI wallet can be shared with the device 500. For example, the processor which comprises the DI wallet application can be used also for other purposes, such as running other types of software, applications, etc., in the device 500 that are, and/or are not, related to the DI wallet. The DI wallet (and thus the DI wallet entity 200) enables the user (i.e., the natural person 600) to store, manage, and share personal identity and credential information with other entities, functions, nodes, and devices, in a secure manner. Some non-limiting examples of information that can be stored, managed, and shared by the DI wallet entity 200 are: the identity of the user, the date of birth of the user, nationality of the user, work permits of the user, driver's license details of the user, medical prescription of the user, etc. The DI wallet entity 200 can, for example, be used as a means for identification or confirmation of certain personal attributes for the purpose of enabling the user to access public and/or private digital services. Further in this respect, the DI wallet entity 200 might support different sets of attributes for attestation. For example, the DI wallet entity 200 might support Person Identification Data (PID) for establishing the identity of the natural person. For example, the DI wallet entity 200 might support Electronic Attestation of Attributes (EAA) which are attributes about the natural person or legal person issued by a Trust Service Provider (TSP). For example, the DI wallet entity 200 might support Qualified Electronic Attestation of Attributes (QEAA) which are EAAs issued by a Qualified TSP (QTSP). A set of attributes for attestation is also known as a credential or Verifiable Credential (VC). Among other things, the DI wallet entity 200 might be configured to support requesting and receiving Verifiable Credentials about the NP from (Q)TSP entities 400 according to Open ID for Verifiable Credential Issuance (OpenID4VCI) supporting both ISO/IEC 18013-5 and W3C Verifiable Credentials Data Model. The DI wallet entity 200 might further be configured to support presentation of a combination of attributes from one or more VCs about the NP, as selected by the NP, to relying parties in a Verifiable Presentation according to the following protocols: Open ID for Verifiable Presentations (OpenID4VP) for remote flows involving W3C Verifiable Credentials Data Model, ISO/IEC 18013-5 for proximity flows involving ISO/IEC 18013-5 data model, ISO/IEC 18013-7 for remote flows involving ISO/IEC 18013-5 data model. The DI wallet entity 200 might be configured to support the use of Verifiable Presentations involving Verifiable Credentials granting identity/keys replacement for the communication device 100. The DI wallet entity 200 might further be configured with interfaces and protocols for requesting and receiving Verifiable Credentials (PID, QEAA, or EAA) about the user from a PID or (Q)EAA provider, involving mutual authentication with PID / (Q)EAA provider. The DI wallet entity 200 might further be configured with a combination of attributes from one or more VCs (PID, QEAA, and EAA) about the natural person, as selected by the natural person, to relying parties in a Verifiable Presentation, including to prove the user identity, involves mutual authentication with relying parties.

The SP entity 300 provides a service to the NP with the help of the communication device 100. The SP entity 300 supports identity/key replacement to an NP identity with the help of the DI wallet entity 200. After registration of the service, the SP entity 300 grants identity, or key, replacement of the communication device 100. The key replacement is supported using Verifiable Credentials and associated protocols according to the above. The SP entity 300 might be configured to handle the issuance of Verifiable Credentials on its own, taking also the role of the (Q)TSP entity 400.

The (Q)TSP entity 400 is configured to provides one or more trust services (TS) either as a qualified or as a non-qualified trust service provider. A qualified trust service provider is a TSP who provides one or more qualified trust services (QTS) and is granted the qualified status by some supervisory body. The decision of the supervisory body to grant the qualified status is reflected in a corresponding Trusted List. In this respect, QTSPs are mandatorily listed in a corresponding Trust List while TSP could be, but are not mandatorily, listed in these Trust Lists. The (Q)TSP entity 400 might be configured to provide the (Q)TS, on behalf of SP entities 300, of issuing Verifiable Credentials granting identity, or key, replacement in the communication device 100. The (Q)TSP entity 400 might be configured to support issuance of Verifiable Credentials according to Open ID for Verifiable Credential Issuance (OpenID4VCI) supporting both ISO/IEC 18013-5 and W3C Verifiable Credentials Data Model.

Aspects of Verifiable Credentials for identity, or key, replacement will be disclosed next.

According to at least some of the herein disclosed embodiments, a Verifiable Credential comprises attributes related to identity, or key, replacement in the communication device 100. In some non-limiting examples, at least some of the attributes as listed in Table 1 are used.

**Table 1: Example attributes of a Verifiable Credential**

| Attribute | Description |
|---|---|
| Device identifier (Did) | Unique identifier of the communication device 100 |
| New public key | The new public key generated by the DI wallet entity 200 |
| Key pair generation at the communication device 100 | Attribute indicating that communication device 100 shall generate the key (must not be true when New public key attribute is provided) |
| NP/Wallet identifier | Identifier of the DI wallet entity 200 (or NP) |

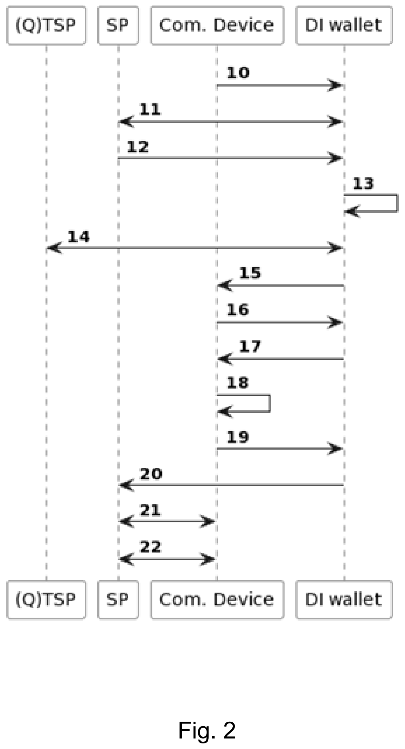

A first example of key replacement in a communication device 100 will be disclosed next with reference to the signaling diagram of Fig. 2. The DI wallet entity 200 of a natural person is leveraged to securely generate and provision an identity for a communication device 100 belonging to the natural person. Attestation protocols supported by the DI wallet entity 200 are leveraged for the issuance of a Verifiable Credential (or (Q)EAA) granting the right for the DI wallet entity 200 to provision an identity (represented by an asymmetric key pair) to the communication device 100. The Verifiable Credential is presented in a Verifiable Presentation (VP) to the communication device 100 by the DI wallet entity 200, where a new key pair generated by the DI wallet entity 200 is transferred to the communication device 100 as part of the Verifiable Presentation. The Verifiable Credential is issued either in mdoc format (as defined in ISO/IEC18013-5) or in W3C format. The communication device 100 contains a key pair and a device identifier (Did). The SP entity 300 is configured with the communication device Did and the public key of the key pair. The device identifier is sent from the communication device 100 to the DI wallet entity 200 (step 10: Device identifier (Did)). The natural person, via the DI wallet entity 200, registers with the SP entity 300 and requests a service involving/utilizing the communication device 100, including to provision a new key pair to the communication device 100 (step 11: Request service for device (Did) authentication of NP using DI Wallet). The SP entity 300 approves the request and a VC is to be issued giving the DI wallet entity 200 the right to provide a new key pair to the communication device 100 with device identifier Did. The SP entity 300 confirms the approval of the request by sending a token for the key replacement and an address to the (Q)TSP entity 400 to the DI wallet entity 200 (step 12: Token for key replacement, TSP address). The DI wallet entity 200 generates a new key pair to be transferred to the communication device 100 (step 13: create key-pair representing NP at device). The DI wallet entity 200 requests the VC from the (Q)TSP where the new public key can be included (step 14: Request Verifiable Credential (token) and authentication of NP using DI Wallet). The VC is issued to the DI wallet entity 200 by the (Q)TSP entity 400 on behalf of the SP entity 300 (step 15: Verifiable Credential). The OpenID for Verifiable Credential Issuance (OpenID4VCI) protocol can be used by the DI wallet entity 200 to retrieve the Verifiable Credential. The DI wallet entity 200 requests key replacement in the communication device 100 (step 16: Request key replacement). The communication device 100 then communicates with the DI wallet entity 200 using a protocol, either the ISO/IEC18013-5 protocol, the ISO/IEC18013-7 protocol or the Open ID for Verifiable Presentation (OpenID4VP) protocol, to retrieve a Verifiable Presentation (called mdoc response in ISO/IEC18013-5) containing the VC, or part of the VC (step 17: Request Verifiable Presentation). The DI wallet entity 200 provides the generated key pair for use in the communication device 100 as part of the VP (step 18: Verifiable Presentation containing VC and new device key pair). The communication device 100 verifies the VP, replaces its existing device key pair (step 19: Verify VP and replace device key pair), and sends an acknowledgment of the key replacement to the DI wallet entity 200 (step 20: acknowledgement of key replacement). Upon successful transfer and replacement of the existing device key pair with the new one, the natural person, via the DI wallet entity 200 notifies the SP entity 300 about the successful key replacement and send the new public key to the SP entity 300 (step 21: successful key replacement done, new device public key). The SP entity 300 can then connect (using the new public key) to the communication device 100 and check that key exchange was successful and update the key that it stores for the communication device 100 to the new public key (step 22: verify successful key pair replacement and replace old device public key with new one at SP). The communication device 100 and the SP entity 300 can then communicate with each other, using the keys of the new key pair to encrypt the communication (step 23: deliver service).

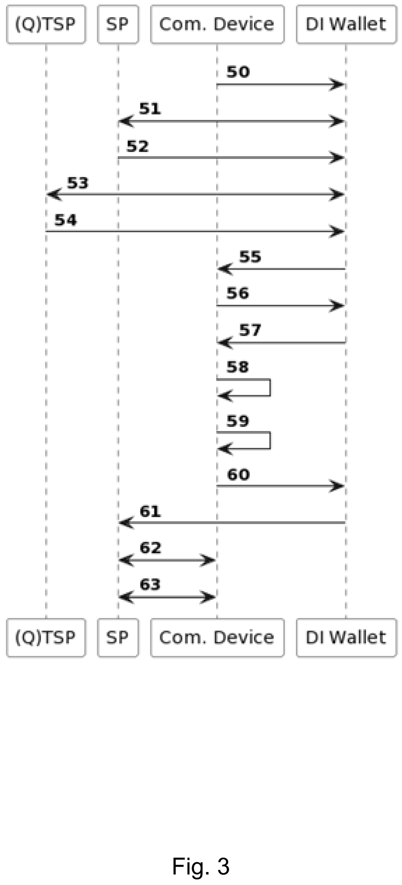

A second example of key replacement in a communication device 100 will be disclosed next with reference to the signaling diagram of Fig. 3. In this example, the key pair is generated by the communication device 100 itself, as triggered by the DI wallet entity 200 and the VC giving the DI wallet entity 200 the right to trigger the generation of the key pair and where the DI wallet entity 200 handles the interaction with the (Q)TSP entity 400 and the SP entity 300 for the key replacement, similar to the example in Fig. 1. The SP entity 300 is configured with the communication device Did and the public key of the key pair. The device identifier is sent from the communication device 100 to the DI wallet entity 200 (step 50: Device identifier (Did)). The natural person, via the DI wallet entity 200, registers with the SP entity 300 and requests a service involving/utilizing the communication device 100, including to provision a new key pair to the communication device 100 (step 51: Request service for device (Did) authentication of NP using Wallet). The SP entity 300 approves the request and a VC is to be issued giving the DI wallet entity 200 the right to trigger the generation of a new key pair at the communication device 100 with device identifier Did. The SP entity 300 confirms the approval of the request by sending a token for the key replacement and an address to the (Q)TSP entity 400 to the DI wallet entity 200 (step 52: Token for key replacement, TSP address). The DI wallet entity 200 requests the VC from the (Q)TSP (step 53: Request Verifiable Credential (token) and authentication of NP using Wallet). The VC with a trigger for the communication device 100 to generate key pair is issued to the DI wallet entity 200 by the (Q)TSP entity 400 on behalf of the SP entity 300 (step 54: Verifiable Credential). The OpenID for Verifiable Credential Issuance (OpenID4VCI) protocol can be used by the DI wallet entity 200 to retrieve the Verifiable Credential. The DI wallet entity 200 requests key replacement in the communication device 100 (step 55: Request key replacement). The communication device 100 then communicates with the DI wallet entity 200 using a protocol, either the ISO/IEC18013-5 protocol, the ISO/IEC18013-7 protocol or the Open ID for Verifiable Presentation (OpenID4VP) protocol, to retrieve a Verifiable Presentation (called mdoc response in ISO/IEC18013-5) containing the VC, or part of the VC (step 56: Request Verifiable Presentation). The DI wallet entity 200 provides the VP containing the VC attribute with a trigger for the communication device 100 to a generate key pair (step 57: Verifiable Presentation containing VC with trigger for device to generate key pair). The communication device 100 verifies the VP (step 58: Verify VP). The communication device 100 generates the new device key pair and replaces its existing device key pair (step 59: Generate device key pair and replace the old device key pair), and sends an acknowledgment of the key replacement and the public key of the new device key pair to the DI wallet entity 200 (step 60: acknowledgement of key replacement, new device public key). Upon successful transfer and replacement of the existing device key pair with the new one, the natural person, via the DI wallet entity 200 notifies the SP entity 300 about the successful key replacement and send the new public key to the SP entity 300 (step 61: successful key replacement done, new device public key). The SP entity 300 can then connect (using the new public key) to the communication device 100 and check that key exchange was successful and update the key that it stores for the communication device 100 to the new public key (step 62: verify successful key pair replacement and replace old device public key with new one at SP). The communication device 100 and the SP entity 300 can then communicate with each other, using the keys of the new key pair to encrypt the communication (step 63: deliver service).

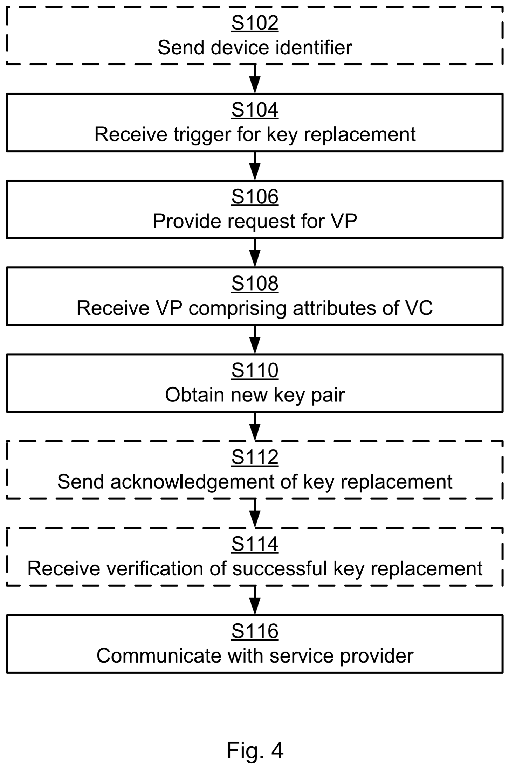

Reference is now made to Fig. 4 illustrating a method for key replacement in a communication device 100 as performed by the communication device 100 according to an embodiment.

S104: The communication device 100 receives a trigger for the communication device 100 to perform the key replacement.

S106: The communication device 100 provides a request to a DI wallet entity 200 for a verifiable presentation for the communication device 100 to perform the key replacement.

S108: The communication device 100 receives the verifiable presentation from the DI wallet entity 200. The verifiable presentation comprises attributes of one or more verifiable credentials.

S110: The communication device 100 obtains a new key pair, and replaces an existing key pair with the new key pair upon the communication device 100 having successfully verified the verifiable presentation.

S116: The communication device 100 communicates with an SP entity 300. The new key pair is used as part of the communication device 100 communicating with the SP entity 300.

Embodiments relating to further details of key replacement in a communication device 100 as performed by the communication device 100 will now be disclosed with continued reference to Fig. 4.

The trigger for the communication device 100 to perform the key replacement might be received after the communication device 100 has sent a device identifier of the communication device 100 to the DI wallet entity 200 (as in above steps 10 and 50). Hence, in some embodiments, the communication device 100 is configured to perform (optional) step S102.

S102: The communication device 100 sends a device identifier of the communication device 100 to the DI wallet entity 200.

Upon having replaced the existing key pair with the new key pair, the communication device 100 might acknowledge the key replacement to the DI wallet entity 200 (as in above steps 20 and 60). Hence, in some embodiments, the communication device 100 is configured to perform (optional) step S112.

S112: The communication device 100 sends an acknowledgement of the key replacement to the DI wallet entity 200.

Further, the communication device 100 might receive a verification of successful key replacement from the SP entity 300 (as in above steps 22 and 62). Hence, in some embodiments, the communication device 100 is configured to perform (optional) step S114.

S114: The communication device 100 receives a verification of successful key replacement from the SP entity 300.

In some embodiments, the new key pair is obtained by being received from the DI wallet entity 200, as in the example of Fig. 2.

In some embodiments, the new key pair is obtained by being generated by the communication device 100, as in the example of Fig. 3.

In some embodiments, the attributes of the verifiable credentials comprise a device identifier of the communication device 100, a device identifier of the DI wallet entity 200, and either a public key of the new key pair or an indication that the new key pair is to be generated by the communication device 100.

In some embodiments, the communication device 100 utilizes either an ISO/IEC18013-5 protocol, an ISO/IEC18013-7 protocol, or an OpenID4VP protocol for communication with the DI wallet entity 200.

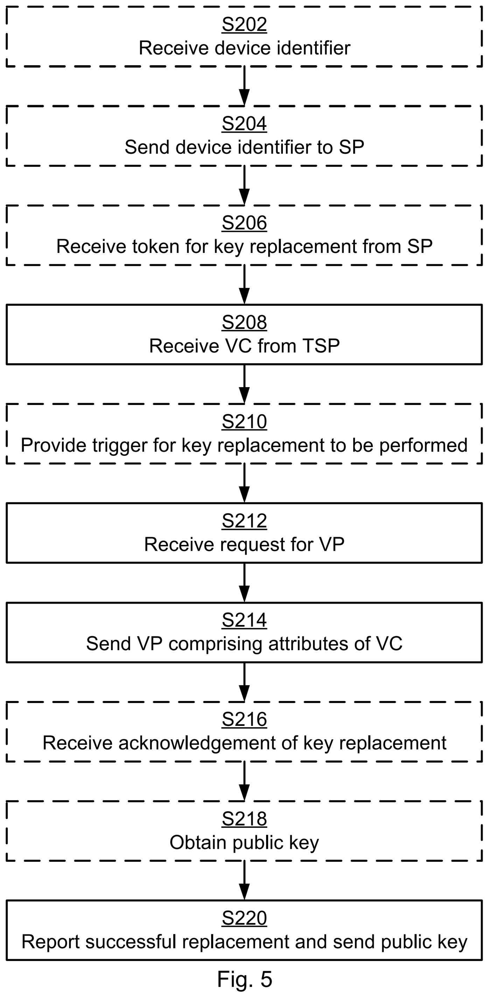

Reference is now made to Fig. 5 illustrating a method for key replacement in a communication device 100 as performed by the DI wallet entity 200 according to an embodiment.

S208: The DI wallet entity 200 receives one or more verifiable credentials from a TSP entity 400.

S212: The DI wallet entity 200 receives a request from the communication device 100 for a verifiable presentation for the communication device 100 to perform the key replacement of a key pair.

S214: The DI wallet entity 200 sends a verifiable presentation comprising attributes of the verifiable credentials to the communication device 100.

S220: The DI wallet entity 200 reports successful key replacement of the key pair with a new key pair and sending a new public key of the new key pair to the SP entity 300.

Embodiments relating to further details of key replacement in a communication device 100 as performed by the DI wallet entity 200 will now be disclosed with continued reference to Fig. 5.

As disclosed above, the communication device 100 might send a device identifier of the communication device 100 to the DI wallet entity 200 (as in above steps 10 and 50). Hence, in some embodiments, the DI wallet entity 200 is configured to perform (optional) step S202.

S202: The DI wallet entity 200 receives a device identifier of the communication device 100 from the communication device 100.

As in above steps 11 and 51, the natural person, via the DI wallet entity 200, registers with the SP entity 300 and requests a service involving/utilizing the communication device 100, including to provision a new key pair to the communication device 100. The SP entity 300 might then approve the request and a VC is to be issued giving the DI wallet entity 200 the right to provide a new key pair to, or trigger the generation of a new key pair at, the communication device 100 with device identifier Did, as in above steps 12 and 52. Hence, in some embodiments, the DI wallet entity 200 is configured to perform (optional) steps S204 and S206.

S204: The DI wallet entity 200 sends the device identifier to an SP entity 300 and requesting a service as providable by the communication device 100 for the SP entity 300.

S206: The DI wallet entity 200 receives a token for key replacement from the SP entity 300. The verifiable credentials are received in response to the DI wallet entity 200 having sent the token in a request to the TSP entity 400.

As in above steps 16 and 55, the DI wallet entity 200 might request key replacement in the communication device 100. Hence, in some embodiments, the DI wallet entity 200 is configured to perform (optional) step S210.

S210: The DI wallet entity 200 provides a trigger for the communication device 100 to perform the key replacement.

As in above steps 20 and 60, the communication device 100 might send an acknowledgment of the key replacement to the DI wallet entity 200. Hence, in some embodiments, the DI wallet entity 200 is configured to perform (optional) step S216.

S216: The DI wallet entity 200 receives an acknowledgement of key replacement by the communication device 100.

As in above step 13 the DI wallet entity 200 might generate a new key pair, and as in above step 60, the DI wallet entity 200 might receive the new device public key from the communication device 100. Hence, in some embodiments, the DI wallet entity 200 is configured to perform (optional) step S218.

S218: The DI wallet entity 200 obtains the new public key of the new key pair.

In some embodiments, the new public key of the new key pair is obtained by the new key pair being generated by the DI wallet entity 200, as in the example of Fig. 2.

In some embodiments, the new public key of the new key pair is obtained by being received from the communication device 100, as in the example of Fig. 3.

As disclosed above, in some embodiments, the attributes of the verifiable credentials comprise a device identifier of the communication device 100, a device identifier of the DI wallet entity 200, and either a public key of the new key pair or an indication that the new key pair is to be generated by the communication device 100.

In some embodiments, the DI wallet entity 200 utilizes either an ISO/IEC18013-5 protocol, an ISO/IEC18013-7 protocol or an OpenID4VP protocol for communication with the communication device 100.

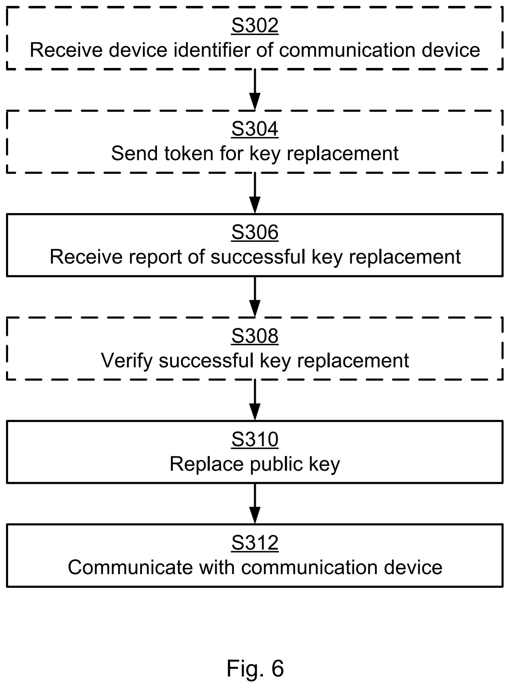

Reference is now made to Fig. 6 illustrating a method for key replacement in a communication device 100 as performed by the SP entity 300 according to an embodiment.

S306: The SP entity 300 receives a report of successful key replacement of a key pair at the communication device 100 and a new public key of the key pair from a DI wallet entity 200.

S310: The SP entity 300 replaces a public key of a key pair at the SP entity 300 with the new public key.

S312: The SP entity 300 communicates with the communication device 100. The new public key is used as part of the SP entity 300 communicating with the communication device 100.

Embodiments relating to further details of key replacement in a communication device 100 as performed by the SP entity 300 will now be disclosed with continued reference to Fig. 6.

As in above steps 11 and 51, the natural person, via the DI wallet entity 200, registers with the SP entity 300 and requests a service involving/utilizing the communication device 100, including to provision a new key pair to the communication device 100. The SP entity 300 might then approve the request and a VC is to be issued giving the DI wallet entity 200 the right to provide a new key pair to, or trigger the generation of a new key pair at, the communication device 100 with device identifier Did, as in above steps 12 and 52. Hence, in some embodiments, the SP entity 300 is configured to perform (optional) steps S302 and S304.

S302: The SP entity 300 receives a device identifier of the communication device 100 and a request for the service from the DI wallet entity 200.

S304: The SP entity 300 sends a token for key replacement to the DI wallet entity 200.

As in above steps 22 and 62 the SP entity 300 can connect (using the new public key) to the communication device 100 and check that key exchange was successful. Hence, in some embodiments, the SP entity 300 is configured to perform (optional) step S308.

S308: The SP entity 300 verifies successful key replacement to the communication device 100 upon having received a report of successful key replacement of a key pair at the communication device 100.

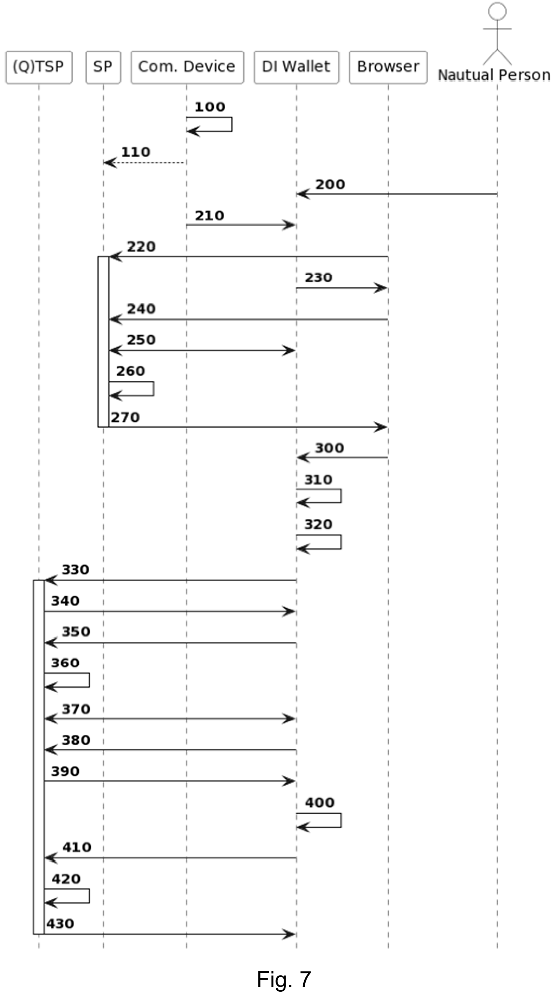

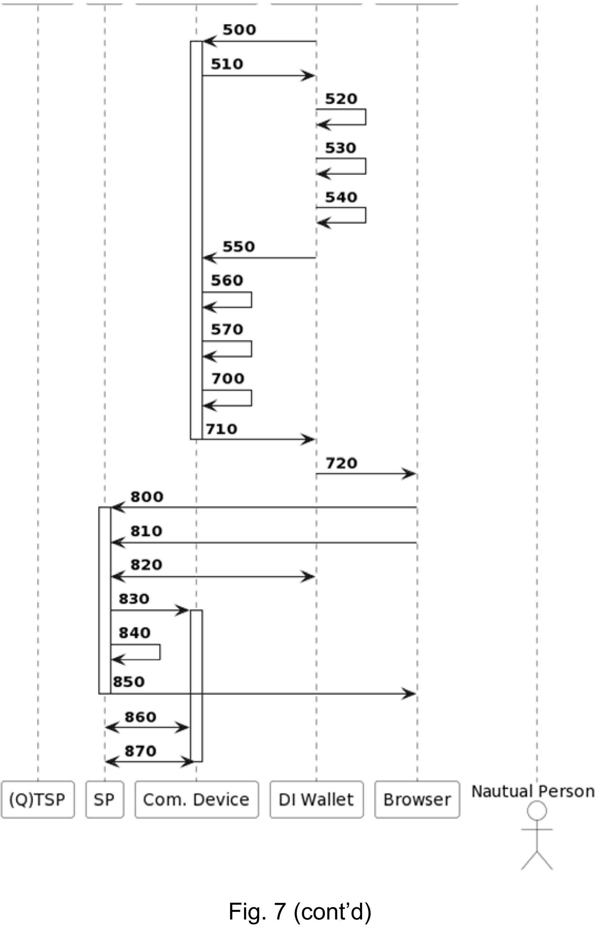

An example of provisioning of an identity generated by the DI wallet entity 200 to the communication device 100 based on at least some of the above disclosed embodiments will now be disclosed in detail with reference to the signaling diagram of Fig. 7. This is an example of provisioning of an identity, or keys, generated by the DI wallet entity 200 to the communication device 100. In this example it is assumed that the communication device 100 is interacting with the DI wallet entity 200 using ISO/IEC18013-5 over a short-range communication interface such as NFC, Bluetooth low-energy, WiFi or similar communication interface. The communication device 100 is equipped with a device identity comprising the device identifier (Did) and a device key pair consisting of a public key PuD and a private key PrD. The key pair might have been generated during device manufacturing or might have been installed after production e.g., as part of a bootstrap procedure.

Step 100: Communication device Did in QR
A quick response (QR) code containing the device identifier (Did) is generated to be displayed for the purpose of transferring the communication device Did e.g., to the DI wallet entity 200 in later steps.

Step 110: Communication device Did + PuD
The communication device Did and the PuD are transferred to the SP entity 300, e.g., delivered directly from the device manufacturer to the SP entity 300, obtained through the bootstrap procedure, obtained directly from the communication device 100, or from the printing (e.g., QR code) on the box in which the communication device 100 is delivered.

Step 200: Login
The natural person, i.e., the user of the device (e.g., mobile phone) where the DI wallet entity 200 is located, logs in to the DI wallet entity 200.

Step 210: Communication device Did
The DI wallet entity 200 obtains the communication device Did, e.g., by scanning a QR code displayed by the communication device 100 (or the box of the communication device 100) or by communication with the communication device 100 e.g., via Bluetooth low-energy or NFC.
Step 220: Start server TLS session
Step 230: Communication device Did
Step 240: Request service for communication device with communication device Did

Using a browser in the device comprising the DI wallet entity 200, the NP connects to the SP entity 300 for registering to a service offered by the SP entity 300, leveraging the communication device 100, including provisioning of a new key pair to the communication device 100. Secure communication is established e.g., using Hypertext Transfer Protocol Secure (HTTPS) with standard Transport Layer Security (TLS) in server authentication mode where the SP entity 300 is authenticated. The communication device Did is obtained by the browser from the DI wallet entity 200 and provided in the request for the service.
Step 250: Authentication of Natural Person using identity in DI wallet entity 200

The NP is authenticated to the SP entity 300 leveraging the DI wallet entity 200. For example, this might involve attestation of PID attributes (and possibly attributes from other (Q)EAAs) based on a Verifiable Presentation provided by the DI wallet entity 200.
Step 260: Create token comprising Did, PuD, and identifier of DI wallet entity 200 and/or NP

The SP entity 300 approves the request for the service and the provisioning of a new key pair to the communication device 100. A token is created containing the communication device Did and the NP, or Wallet, identifier, and possibly also the PuD.
Step 270: Token, (Q)TSP address

The token, the PuD (if not already part of the token), and address of the (Q)TSP entity 400 from where a Verifiable Credential can be obtained granting the right to install a new key pair in the communication device 100.
Step 300: Token, (Q)TSP address
Step 310: Create key pair PrWalVC, PuWalVC
Step 320: Create key pair PrDnew, PuDnew

The token, PuD, and (Q)TSP address is provided to the DI wallet entity 200, triggering the DI wallet entity 200 to generate the new key pair for the communication device 100 (PrDnew, PuDnew) and a key pair for use in the Verifiable Credential (PrWalVC, PuWalVC). Alternatively, an already existing DI wallet entity 200 key pair is leveraged for the VC.
Step 330: OpenID4VCI: start server TLS session

Using the (Q)TSP address, the DI wallet entity 200 establishes secure communication with the (Q)TSP entity 400, e.g., using HTTPS with standard TLS protocol in server authentication mode where the (Q)TSP entity 400 is authenticated. The Open ID for Verifiable Credential Issuance (OpenID4VCI) protocol is executed between the (Q)TSP entity 400 (i.e., the issuer) and the DI wallet entity 200 (i.e., holder). OpenID4VCI is based on OAuth2.0 and the issuer/(Q)TSP server corresponds to an Authorization Server.
Step 340: OpenID4VCI: issuer metadata
Step 350: OpenID4VCI: Request VC(token,PuWalVC,PuDnew,mdoc format)
Step 360: OpenID4VCI: validate request including token

The DI wallet entity 200 receives issuer metadata and, based on the metadata, provides a request for a Verifiable Credential granting the right to install a new key pair in the communication device 100. The request comprises the token, PuDnew, PuWalVC, and the format of the VC (e.g., mdoc format defined in ISO/IEC 18013-5). The (Q)TSP entity 400 validates the request including the token originating from the SP entity 300.
Step 370: OpenID4VCI: Authentication of Natural person using DI wallet entity 200, where the DI wallet entity 200 gets authorization code
Step 380: OpenID4VCI: authorization code

The NP is authenticated to the (Q)TSP entity 400 leveraging the DI wallet entity 200. For example, this comprises attestation of PID attributes (and possibly attributes from other (Q)EAAs) based on a Verifiable Presentation provided by the DI wallet entity 200. Upon successful validation of the request for a VC and authentication, the DI wallet entity 200 receives an OAuth 2.0 authorization code. The authorization code is provided to the token endpoint part of the (Q)TSP server (Authorization Server).
Step 390: OpenID4VCI: access token, challenge
Step 400: OpenID4VCI: sign challenge using PrWalVC
Step 410: OpenID4VCI: access token,signature
Step 420: OpenID4VCI: verify signature, generate VC (mdoc) for communication device Did containing PuWalVC and PuDnew
Step 430: OpenID4VCI:VC (mdoc)

The (Q)TSP entity 400 returns an OAuth 2.0 access token and a challenge for the DI wallet entity 200 to provide proof of possession of PrWalVC. The DI wallet entity 200 signs the challenge using PrWalVC and the signature is provided along with the access token back to the (Q)TSP entity 400 that verifies the signature. Upon successful signature verification, the (Q)TSP entity 400 generates a Verifiable Credentials (in this case in mdoc format) with attributes as in Table 1 and includes also PuWalVC. The VC is delivered to the DI wallet entity 200.

Step 500: Request key replacement
The communication device 100 and the DI wallet entity 200 establishes a connection (e.g., using NFC, Bluetooth low-energy, or WiFi) and the DI wallet entity 200 requests key replacement in the communication device 100 using the ISO/IEC 18013-5 protocol. This request triggers the key replacement in the communication device 100. This request corresponds to the initialization and device engagement phase in ISO/IEC 18013-5. This may involve one or more specific commands being sent from the DI wallet entity 200 to the communication device 100 and/or the NP/user that starts-up the communication device 100 in a specific mode, or triggers the communication device 100 to enter a specific mode. Following ISO/IEC 18013-5, as part of the device engagement the DI wallet entity 200 generates an ephemeral key pair and sends the public key to the communication device 100 along with a cipher suite identifier and elliptic curve identifier.

Step 510: ISO18013-5: derive session keys, prepare mdoc request, signed using PrD, and encrypted using session keys
The communication device 100 follows ISO/IEC 18013-5 and performs the following:
The communication device 100 generates an ephemeral key pair and performs the Elliptic Curve Key Agreement - Diffie Hellman (ECKA-DH) algorithm with its ephemeral private key and the ephemeral public of the DI wallet entity 200 to establish a session key for encryption.

The communication device 100 then prepares the request for VC (the mdoc request) and signs it together with a session transcript based on exchanged data including the DI wallet entity 200 ephemeral public key, communication device 100 ephemeral public key, cipher suite identifier, and elliptic curve identifier. The signature is created using the communication device 100 private key PrD.

The mdoc document type is set to indicate the request is for a VC (mdoc) for key replacement.

The communication device 100 encrypts the mdoc request using the session encryption key and sends the encrypted mdoc request along with its ephemeral public key.

Step 520: ISO18013-5: authenticate communication device 100 using PuD and derive keys for secure session
The DI wallet entity 200 performs the Elliptic Curve Key Agreement - Diffie Hellman (ECKA-DH) algorithm with its ephemeral private key and the ephemeral public of the communication device 100 to derive the session key for encryption and uses it to decrypt the encrypted mdoc request. The DI wallet entity 200 then authenticates the communication device 100 using the communication device 100 public key PuD and validates the mdoc request.
Step 530: ISO18013-5: prepare signed mdoc response signed using PrWalVC, containing PrDnew
Step 540: ISO18013-5: encrypt mdoc response
Step 550: ISO18013-5: send encrypted mdoc response

The DI wallet entity 200 prepares an mdoc response (Verifiable Presentation) comprising the VC (called the Mobile Security Object (MSO) in ISO/IEC 18013-5) and the new private key of the communication device 100, PrDnew. The mdoc response is signed using the DI wallet entity 200 private key PrWalVC whose public key is part of the VC. The signed mdoc response is encrypted using the session encryption key and the DI wallet entity 200 sends the encrypted response to the communication device 100.

Step 560: ISO18013-5: decrypt mdoc response, authenticate DI wallet, and verify mdoc response
The communication device 100 decrypts the encrypted mdoc response, verifies the mdoc response by verifying the MSO (i.e., the VC), extracting the PuWalVC from the MSO, authenticating the DI wallet entity 200 using PuWalVC by verifying the DI wallet entity 200 signature of the mdoc response.

Step 570: Verify that mdoc is valid for communication device Did, extract PrDnew and PuDnew
The communication device 100 verifies that the received mdoc data is valid for this communication device 100 by checking that the communication device Did in the mdoc data matches the one of the communication device 100. The communication device 100 extracts the new key pair (PrDnew , PuDnew) from the mdoc response.
Step 700: Replace keys: PrD = PrDnew, and PuD = PuDnew
Step 710: Acknowledgement of successful key replacement

The communication device 100 replaces the old key pair with the new key pair, and acknowledges successful key replacement to the DI wallet entity 200.

Step 720: Successful key replacement, PuDnew
The DI wallet entity 200 responds back to the browser with the new public key of the communication device 100 (PuDnew).
Step 800: [start server TLS session]
Step 810: Communication device Did switch done, PuDnew
Step 820: [Authentication of Natural Person using identity in DI wallet]

The browser again connects to the SP entity 300 (steps 800 and 820 corresponds to the steps 220 and 240), or resumes (without the need to perform steps 800 and 820) if connection is still up, to notify the SP entity 300 that the communication device Did switch has been performed and to provide the new public key PuDnew of the communication device 100.
Step 830: Start mTLS session based on assuming PuD=PuDnew
Step 840: Set PuD = PuDnew, i.e., replace PuD with PuDnew
Step 850: Service will be delivered

The SP entity 300 triggers the communication device 100 to connect to the SP entity 300 and establishes a mutually authenticated TLS session where the SP entity 300 authenticates the communication device 100 using PuDnew. If the authentication is successful and the TLS session is established and the SP entity 300 is convinced of successful key replacement, the SP entity 300 changes to the new public key PuDnew in its database. The SP entity 300 notifies the NP (through the browser) of successful key replacement and that the service now will be delivered.
Step 860: Deliver service
Service Delivery starts.
Step 870: Terminate service

At some later point in time the service may be terminated.

In some scenarios, the SP entity 300 may be the manufacturer of the communication device 100 allowing the NP to register a first operational identity, or key pair. The service is in this case an activation of the communication device 100.

In steps 530-560 the new private key of the communication device 100, PrDnew, may, for example, be part of the DeviceNameSpaceBytes of an mdoc (Verifiable Presentation) in the mdoc response. Alternatively, it may be part of a self-issued VC (mdoc), issued and signed by the DI wallet entity 200 itself, included as an additional mdoc in the mdoc response. In this case the mdoc request may or may not contain information requesting also this mdoc from the DI wallet entity 200. In yet another alternative, the new private key is not contained in the mdoc response data structure, but may be delivered in a separately signed and encrypted data object (e.g., created using the same keys as used to sign and encrypt the mdoc response) together with the mdoc response to the communication device 100.

In yet another alternative, the new public key of the communication device 100, PuDnew, is not provided to the (Q)TSP entity 400 in step 350 and not included in the Verifiable Credential (mdoc) provided to the DI wallet entity 200 in step 430. It may, for example, be part of a self-issued VC (mdoc), issued and signed by the DI wallet entity 200 itself, and included as an additional mdoc in the mdoc response. In this case the mdoc request may or may not contain information requesting also this mdoc from the DI wallet entity 200. For example, the new public key and the new private key may be part of the same self-issued VC (mdoc). Alternatively, the new public key is not contained in the mdoc response data structure, but may be delivered in a separately signed and encrypted data object (e.g., created using the same keys as used to sign and encrypt the mdoc response) together with the mdoc response to the communication device 100. For example, the new public key and the new private key may be part of the same signed and encrypted data object.

In one alternative, the interaction with the SP entity 300 in steps 220-270 is the start of the OpenID4VCI exchange between the DI wallet entity 200 and the credential issuer. OpenID4VCI leverages OAuth 2.0. For example, in this case the SP entity 300 represents the authorization end-point that issues a token to the NP via the browser. For example, this token may represent (or include) an access token that the DI wallet entity 200 presents to the token end-point represented by the (Q)TSP entity 400.

In one example, the token returned in step 270 contains a(n ephemeral) public key provided by the DI wallet entity 200 during authentication in step 250 and that can be used to authenticate the DI wallet entity 200 in step 370 in a simpler way than via PID etc.

In case the SP entity 300 and the (Q)TSP entity 400 is one and the same entity, some simplification of the method in Fig. 7 can be made. For example, there is no need to create a token in 260. Step 270 can just be a trigger for the DI wallet entity 200 to be invoked to request the VC. The issuer metadata of step 340 can be returned in step 270 instead. Steps 330 and 370 are not needed to be performed.

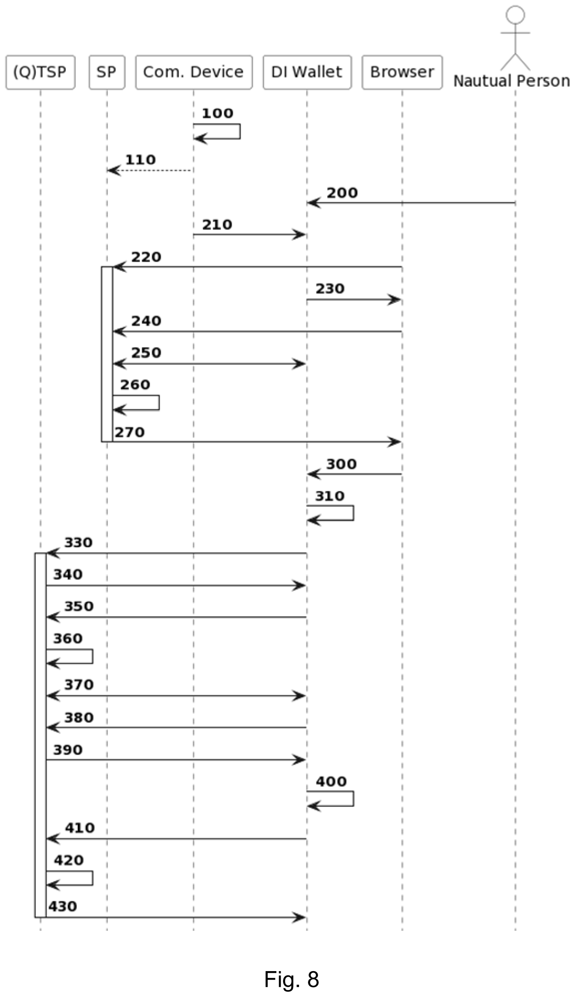

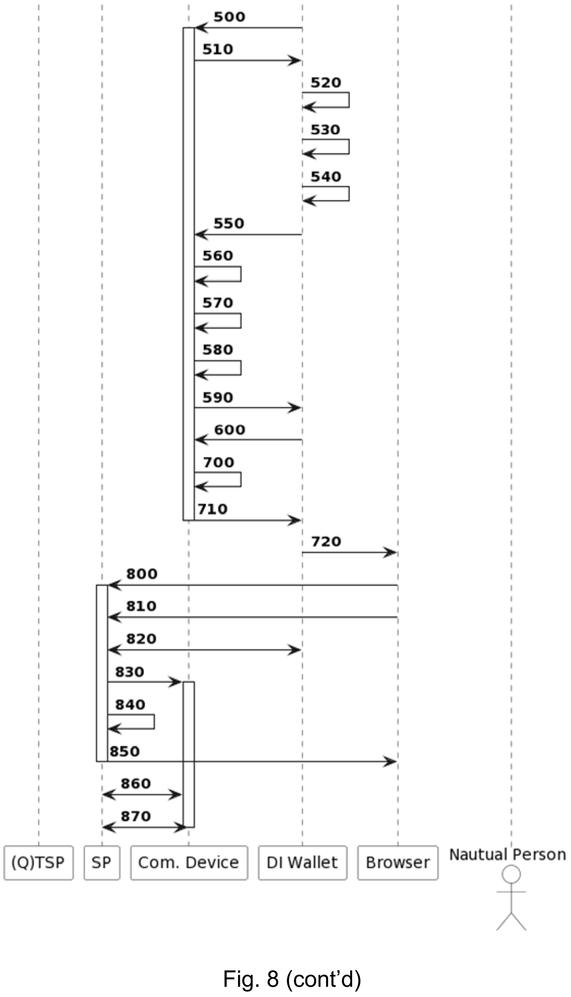

An example of provisioning of an identity generated by the communication device 100 based on a trigger received from the DI wallet entity 200 based on at least some of the above disclosed embodiments will now be disclosed in detail with reference to the signaling diagram of Fig. 8. The VC gives the DI wallet entity 200 the right to trigger the generation of the key pair and the DI wallet entity 200 handles the interaction with the (Q)TSP entity 400 and the SP entity 300 for the key replacement as in Fig. 7. Also in this example it is assumed that the communication device 100 is interacting with the DI wallet entity 200 using ISO/IEC18013-5 over a short-range communication interface such as NFC, Bluetooth low-energy, WiFi or similar communication interface.
Steps 100-310 are performed as in Fig. 7.
Step 320: Create key pair PrDnew, PuDnew

The key pair PrDnew, PuDnew is not generated by the DI wallet entity 200. Hence, step 320 as disclosed above with reference to Fig. 7 is not performed in the method of Fig. 8. Instead, the key pair is generated later by the communication device 100 (see, below step 580).
Steps 330-340 are performed as in Fig. 7.
Step 350: OpenID4VCI: Request VC(token,PuWalVC,devkeygen,mdoc format)

The request for the Verifiable Credential may contain a devkeygen trigger for the key pair to be generated by the communication device 100 instead of the new public key PuDnew generated by the DI wallet entity 200. It can also be that the (Q)TSP entity 400 only supports e.g. device-generated key pair and no trigger is needed in the request.
Steps 360-410 are performed as in Fig. 7.
Step 420: OpenID4VCI: verify signature, generate VC (mdoc) for communication device Did containing PuWalVC

In comparison to Fig. 7, the Verifiable Credential in step 420 of Fig. 8 comprises a devkeygen trigger instead of the PuDnew.
Steps 430-560 are performed as in Fig. 7.
Step 570: Verify that mdoc is valid for communication device Did

When parsing the VC, the communication device 100 finds the devkeygen trigger indicating that the communication device 100 shall generate a new key pair.

Step 580: Create key pair PrDnew, PuDnew
The key pair is generated by the communication device 100.

Step 590: PuDnew
The communication device 100 delivers the new public key PuDnew to the DI wallet entity 200.

Step 600: Acknowledgement
The communication device 100 awaits an acknowledgement from the DI wallet entity 200 before replacing the old key pair with the new key pair in step 700.

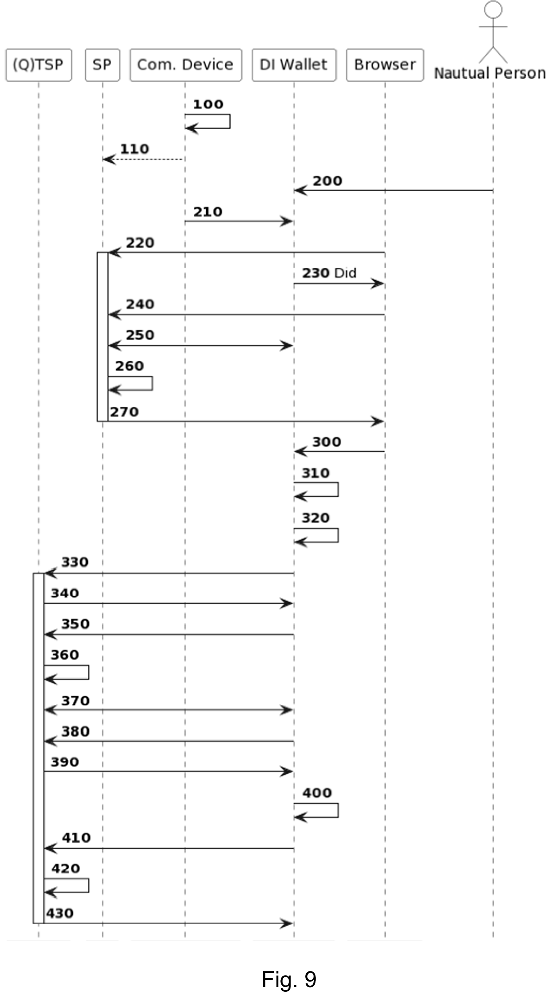

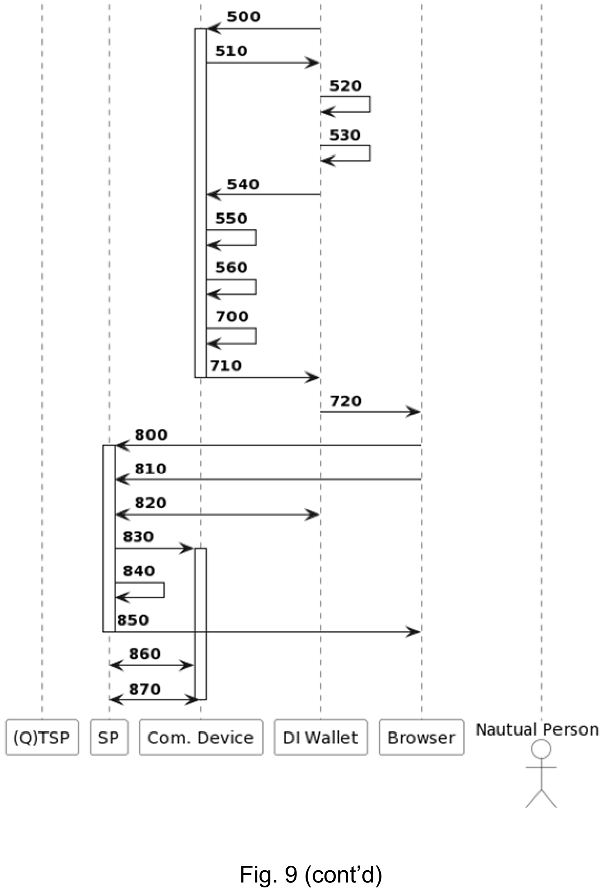

Steps 700-850 are performed as in Fig. 7.
An example of provisioning of an identity generated by the DI wallet entity 200 to the communication device 100 based on using OpenID4VP based on at least some of the above disclosed embodiments will now be disclosed in detail with reference to the signaling diagram of Fig. 9. OpenID4VP is typically used in case of communication between the communication device 100 and the DI wallet entity 200 over WiFi or cellular communication. There are many different options for securing the communication between the communication device 100 and DI wallet entity 200 (e.g., TLS or COSE Encryption and Signing of JSON encoded requests and responses (JWT)) and mutual authentication.
Steps 100-340, 360-410 are performed as in Fig. 7.
Step 350: OpenID4VCI: Request VC(token,PuWalVC,PuDnew,W3C VC data model format)
Step 420: OpenID4VCI: verify signature, generate VC (W3C format) for communication device Did containing PuWalVC and PuDnew
Step 430: OpenID4VCI: VC (W3C format)

The VC request in step 350 indicates a request for a VC according to the W3C VC data model and the issued VC (step 420) that is sent to the DI wallet entity 200 in step 430 follows this format.

Step 500: Request key replacement
The DI wallet entity 200 learns the address of the communication device 100 (e.g., by scanning a QR code displayed by the communication device 100), establishes a connection (e.g., TLS-based) with the communication device 100 and requests key replacement from the communication device 100 using the Open ID for Verifiable Presentation (OpenID4VP) protocol.

Step 510: OpenID4VP: request for VC, signed using PrD, including ephemeral key public key
The communication device 100 performs the following. The communication device 100 generates an ephemeral key pair. The communication device 100 then prepares the request for a VC for key replacement. Following OpenID4VP this is an OAuth 2.0 Authorization Request with Verifiable Presentation dedicated parameters. The communication device 100 signs the request together with the communication device 100 ephemeral public key. The signature is created using the communication device 100 private key PrD. The communication device 100 sends the signed VC request along with its ephemeral public key.

Step 520: OpenID4VP: authenticate communication device 100 using PuD, generates ephemeral key pair and derives key for encryption
The DI wallet entity 200 authenticates the communication device 100 using the communication device 100 public key PuD and validates the VC request. The DI wallet entity 200 generates an ephemeral key pair and performs the Elliptic Curve Key Agreement - Diffie Hellman (ECKA-DH) algorithm with its ephemeral private key and the communication device 100 ephemeral public key to derive a session key for encryption.

Step 530: OpenID4VP: prepare signed and encrypted response signed using PrWalVC, containing PrDnew
Step 540: OpenID4VP: encrypted VP

The DI wallet entity 200 prepares a signed Verifiable Presentation, e.g., using JWT Secured Authorization Response Mode for OAuth 2.0, containing the requested VC and the new private key of the communication device 100, PrDnew. The JWT may be a Selective-Disclosure JWT (SD-JWT). The VP is signed using the DI wallet entity 200 private key PrWalVC whose public key is part of the VC. The signed VP is encrypted using the session encryption key and the DI wallet entity 200 sends the encrypted and signed VP, e.g., as the vp_token parameter of an OAuth 2.0 Authorization response, to the communication device 100 along with its ephemeral public key.

Step 550: OpenID4VP: derive key for encryption, decrypt the VP, authenticates wallet, and verify VP
The communication device 100 performs the Elliptic Curve Key Agreement - Diffie Hellman (ECKA-DH) algorithm with its ephemeral private key and the ephemeral public of the DI wallet entity 200 to establish a session key for encryption. The communication device 100 decrypts the encrypted VP, verifies the VC and extracts PuWalVC from the VC, authenticates the DI wallet entity 200 using PuWalVC by verifying the DI wallet entity 200 signature of the VP.

Step 560: OpenID4VP: verify that the VP and included VC is valid for communication device Did, extract PrDnew and PuDnew
The communication device 100 verifies that the received VP, including the associated VC, is valid for this communication device 100 by checking that the communication device Did in the VC matches the one of the communication device 100. The communication device 100 extracts the new key pair (PrDnew - PuDnew) from the VP.

In steps 530-560 the new private key of the communication device 100, PrDnew, may, for example, be part of the Verifiable Presentation metadata. Alternatively, it is part of a self-issued VC, issued and signed by the DI wallet entity 200 itself, included as part of the Verifiable Presentation in addition to the VC obtained in step 430. In this case the Verifiable Presentation request may contain information requesting also attributes from this VC from the DI wallet entity 200. In yet another alternative, the new private key is not contained in the Verifiable Presentation, but may be delivered in a separately signed and encrypted data object (e.g., created using the same keys as used to sign and encrypt the VP) together with the Verifiable Presentation to the communication device 100.

In yet another alternative, the new public key of the communication device 100, PuDnew, is not provided to the (Q)TSP entity 400 in step 350 and not included in the Verifiable Credential provided to the DI wallet entity 200 in step 430. It may, for example, be part of a self-issued VC, issued and signed by the DI wallet entity 200 itself, and included as an additional VC in the Verifiable Presentation. In this case the Verifiable Presentation request may contain information requesting also attributes from this VC from the DI wallet entity 200. For example, the new public key and the new private key may be part of the same self-issued VC. Alternatively, the new public key is not contained in the Verifiable Presentation, but may be delivered in a separately signed and encrypted data object (e.g., created using the same keys as used to sign and encrypt the VP) together with the Verifiable Presentation to the communication device 100. For example, the new public key and the new private key may be part of the same signed and encrypted data object.

Steps 700-870 are performed as in Fig. 7.

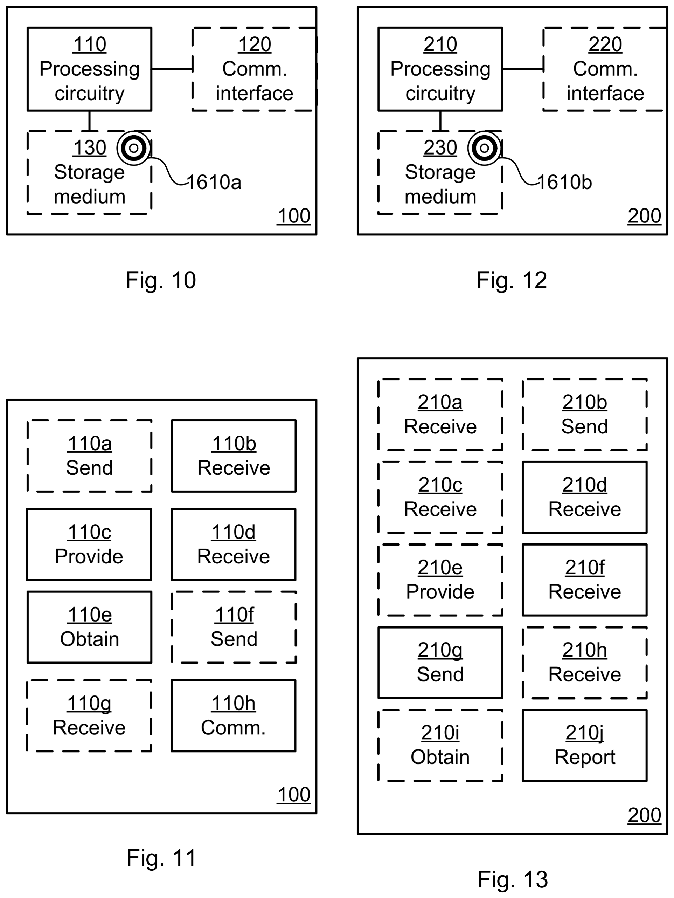

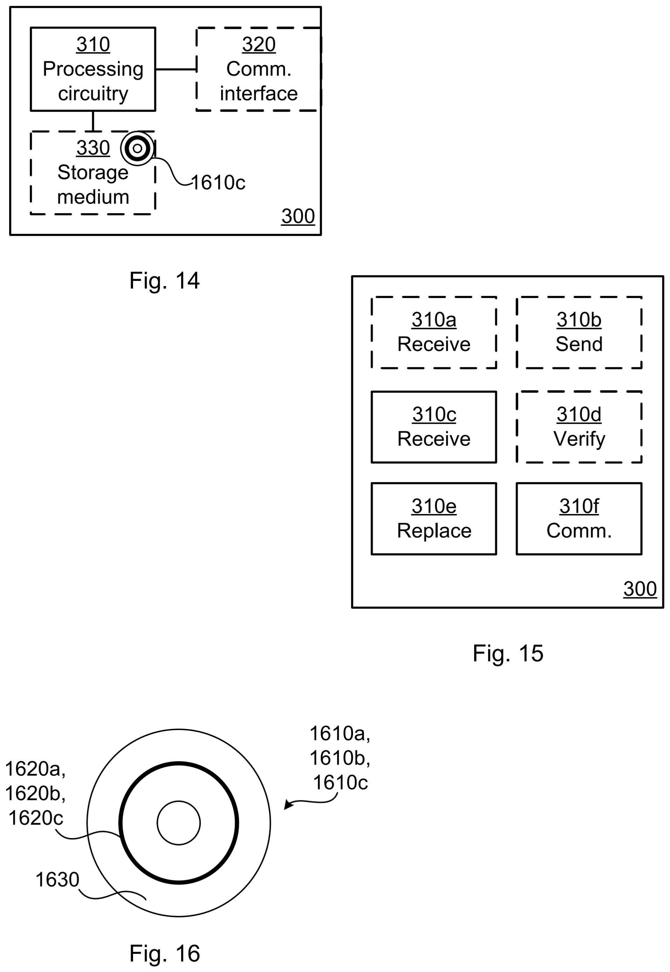

Fig. 10 schematically illustrates, in terms of a number of functional units, the components of a communication device 100 according to an embodiment. Processing circuitry 110 is provided using any combination of one or more of a suitable central processing unit (CPU), multiprocessor, microcontroller, digital signal processor (DSP), etc., capable of executing software instructions stored in a computer program product 1610a (as in Fig. 16), e.g., in the form of a storage medium 130. The processing circuitry 110 may further be provided as at least one application specific integrated circuit (ASIC), or field programmable gate array (FPGA).

Particularly, the processing circuitry 110 is configured to cause the communication device 100 to perform a set of operations, or steps, as disclosed above. For example, the storage medium 130 may store the set of operations, and the processing circuitry 110 may be configured to retrieve the set of operations from the storage medium 130 to cause the communication device 100 to perform the set of operations. The set of operations may be provided as a set of executable instructions. Thus the processing circuitry 110 is thereby arranged to execute methods as herein disclosed.

The storage medium 130 may also comprise persistent storage, which, for example, can be any single one or combination of magnetic memory, optical memory, solid state memory or even remotely mounted memory.

The communication device 100 may further comprise a communications (comm.) interface 120 for communications with other entities, functions, nodes, and devices, as illustrated in Fig. 1. As such the communications interface 120 may comprise one or more transmitters and receivers, comprising analogue and digital components.

The processing circuitry 110 controls the general operation of the communication device 100 e.g., by sending data and control signals to the communications interface 120 and the storage medium 130, by receiving data and reports from the communications interface 120, and by retrieving data and instructions from the storage medium 130. Other components, as well as the related functionality, of the communication device 100 are omitted in order not to obscure the concepts presented herein.

Fig. 11 schematically illustrates, in terms of a number of functional modules, the components of a communication device 100 according to an embodiment. The communication device 100 of Fig. 11 comprises a number of functional modules; a receive module 110b configured to perform step S104, a receive module 110d configured to perform step S108, an obtain module 110e configured to perform step S110, and a communicate (Comm.) module 110h configured to perform step S1116.The communication device 100 of Fig. 11 may further comprise a number of optional functional modules, such as any of a send module 110a configured to perform step S102, a provide module 110c configured to perform step S106, a send module 110f configured to perform step S112, and a receive module 110g configured to perform step S114.

In general terms, each functional module 110a:11oh may be implemented in hardware or in software. Preferably, one or more or all functional modules 110a:110h may be implemented by the processing circuitry 110, possibly in cooperation with the communications interface 120 and the storage medium 130. The processing circuitry 110 may thus be arranged to from the storage medium 130 fetch instructions as provided by a functional module 110a:110h and to execute these instructions, thereby performing any steps of the communication device 100 as disclosed herein.

Fig. 12 schematically illustrates, in terms of a number of functional units, the components of a DI wallet entity 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 1610b (as in Fig. 16), e.g., in the form of a storage medium 230. The processing circuitry 210 may further be provided as at least one application specific integrated circuit (ASIC), or field programmable gate array (FPGA).

Particularly, the processing circuitry 210 is configured to cause the DI wallet entity 200 to perform a set of operations, or steps, as disclosed above. For example, the storage medium 230 may store the set of operations, and the processing circuitry 210 may be configured to retrieve the set of operations from the storage medium 230 to cause the DI wallet entity 200 to perform the set of operations. The set of operations may be provided as a set of executable instructions. Thus the processing circuitry 210 is thereby arranged to execute methods as herein disclosed.

The storage medium 230 may also comprise persistent storage, which, for example, can be any single one or combination of magnetic memory, optical memory, solid state memory or even remotely mounted memory.

The DI wallet entity 200 may further comprise a communications interface 220 for communications with other entities, functions, nodes, and devices, as illustrated in Fig. 1. As such the communications interface 220 may comprise one or more transmitters and receivers, comprising analogue and digital components.

The processing circuitry 210 controls the general operation of the DI wallet entity 200 e.g., by sending data and control signals to the communications interface 220 and the storage medium 230, by receiving data and reports from the communications interface 220, and by retrieving data and instructions from the storage medium 230. Other components, as well as the related functionality, of the DI wallet entity 200 are omitted in order not to obscure the concepts presented herein.

Fig. 13 schematically illustrates, in terms of a number of functional modules, the components of a DI wallet entity 200 according to an embodiment. The DI wallet entity 200 of Fig. 13 comprises a number of functional modules; a receive module 210d configured to perform step S208, a receive module 210f configured to perform step S212, a send module 210g configured to perform step S214, and a report module 210j configured to perform step S220. The DI wallet entity 200 of Fig. 13 may further comprise a number of optional functional modules, such as any of a receive module 210a configured to perform step S202, a send module 210b configured to perform step S204, a receive module 210c configured to perform step S206, a provide module 210e configured to perform step S210, a receive module 210h configured to perform step S216, and an obtain module 210i configured to perform step S218.

In general terms, each functional module 210a:210j may be implemented in hardware or in software. Preferably, one or more or all functional modules 210a:210j may be implemented by the processing circuitry 210, possibly in cooperation with the communications interface 220 and the storage medium 230. The processing circuitry 210 may thus be arranged to from the storage medium 230 fetch instructions as provided by a functional module 210a:210j and to execute these instructions, thereby performing any steps of the DI wallet entity 200 as disclosed herein.

Fig. 14 schematically illustrates, in terms of a number of functional units, the components of an SP entity 300 according to an embodiment. Processing circuitry 310 is provided using any combination of one or more of a suitable central processing unit (CPU), multiprocessor, microcontroller, digital signal processor (DSP), etc., capable of executing software instructions stored in a computer program product 1610c (as in Fig. 16), e.g., in the form of a storage medium 330. The processing circuitry 310 may further be provided as at least one application specific integrated circuit (ASIC), or field programmable gate array (FPGA).

Particularly, the processing circuitry 310 is configured to cause the SP entity 300 to perform a set of operations, or steps, as disclosed above. For example, the storage medium 330 may store the set of operations, and the processing circuitry 310 may be configured to retrieve the set of operations from the storage medium 330 to cause the SP entity 300 to perform the set of operations. The set of operations may be provided as a set of executable instructions. Thus the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The SP entity 300 may further comprise a communications interface 320 for communications with other entities, functions, nodes, and devices, as illustrated in Fig. 1. As such the communications interface 320 may comprise one or more transmitters and receivers, comprising analogue and digital components.

The processing circuitry 310 controls the general operation of the SP entity 300 e.g., by sending data and control signals to the communications interface 320 and the storage medium 330, by receiving data and reports from the communications interface 320, and by retrieving data and instructions from the storage medium 330. Other components, as well as the related functionality, of the SP entity 300 are omitted in order not to obscure the concepts presented herein.

Fig. 15 schematically illustrates, in terms of a number of functional modules, the components of an SP entity 300 according to an embodiment. The SP entity 300 of Fig. 15 comprises a number of functional modules; a receive module 310c configured to perform step S306, a replace 310e module configured to perform step S310, and a communicate (Comm.) module 310f configured to perform step S312. The SP entity 300 of Fig. 15 may further comprise a number of optional functional modules, such as any of a receive module 310a configured to perform step S302, a send module 310b configured to perform step S304, and a verify module 310d configured to perform step S308.

In general terms, each functional module 310a:310f may be implemented in hardware or in software. Preferably, one or more or all functional modules 310a:310f may be implemented by the processing circuitry 310, possibly in cooperation with the communications interface 320 and the storage medium 330. The processing circuitry 310 may thus be arranged to from the storage medium 330 fetch instructions as provided by a functional module 310a:310f and to execute these instructions, thereby performing any steps of the SP entity 300 as disclosed herein.

The SP entity 300 may be provided as a standalone device or as a part of at least one further device. Alternatively, functionality of the SP entity 300 may be distributed between at least two devices, or nodes. Thus, a first portion of the instructions performed by the SP entity 300 may be executed in a first device, and a second portion of the of the instructions performed by the SP entity 300 may be executed in a second device; the herein disclosed embodiments are not limited to any particular number of devices on which the instructions performed by SP entity 300 may be executed. Hence, the methods according to the herein disclosed embodiments are suitable to be performed by a SP entity 300 residing in a cloud computational environment. Therefore, although a single processing circuitry 310 is illustrated in Figs. 14 the processing circuitry 310 may be distributed among a plurality of devices, or nodes. The same applies to the functional modules 310a:310f of Fig. 15 and the computer program 1620c of Fig. 16.

Fig. 16 shows one example of a computer program product 1610a, 1610b, 1610c comprising computer readable means 1630. On this computer readable means 1630, a computer program 1620a can be stored, which computer program 1620a can cause the processing circuitry 210 and thereto operatively coupled entities and devices, such as the communications interface 220 and the storage medium 230, to execute methods according to embodiments described herein. The computer program 1620a and/or computer program product 1610a may thus provide means for performing any steps of the communication device 100 as herein disclosed. On this computer readable means 1630, a computer program 1620b can be stored, which computer program 1620b can cause the processing circuitry 310 and thereto operatively coupled entities and devices, such as the communications interface 320 and the storage medium 330, to execute methods according to embodiments described herein. The computer program 1620b and/or computer program product 1610b may thus provide means for performing any steps of the DI wallet entity 200 as herein disclosed. On this computer readable means 1630, a computer program 1620c can be stored, which computer program 1620c can cause the processing circuitry 410 and thereto operatively coupled entities and devices, such as the communications interface 420 and the storage medium 430, to execute methods according to embodiments described herein. The computer program 1620c and/or computer program product 1610c may thus provide means for performing any steps of the SP entity 300 as herein disclosed.

In the example of Fig. 16, the computer program product 1610a, 1610b, 1610c is illustrated as an optical disc, such as a CD (compact disc) or a DVD (digital versatile disc) or a Blu-Ray disc. The computer program product 1610a, 1610b, 1610c could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1620a, 1620b, 1620c is here schematically shown as a track on the depicted optical disk, the computer program 1620a, 1620b, 1620c can be stored in any way which is suitable for the computer program product 1610a, 1610b, 1610c.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for key replacement in a communication device (100), wherein the method is performed by the communication device (100), and wherein the method comprises:
receiving (S104) a trigger for the communication device (100) to perform the key replacement;
providing (S106) a request to a Digital Identity, DI, wallet entity (200) for a verifiable presentation for the communication device (100) to perform the key replacement;
receiving (S108) the verifiable presentation from the DI wallet entity (200), wherein the verifiable presentation comprises attributes of one or more verifiable credentials;
obtaining (S110) a new key pair, and replacing an existing key pair with the new key pair upon the communication device (100) having successfully verified the verifiable presentation; and
communicating (S116) with a Service Provider, SP, entity (300), wherein the new key pair is used as part of the communication device (100) communicating with the SP entity (300).

2. The method according to claim 1, wherein the method further comprises:
sending (S102) a device identifier of the communication device (100) to the DI wallet entity (200).

3. The method according to any one of the preceding claims, wherein the method further comprises:
sending (S112) an acknowledgement of the key replacement to the DI wallet entity (200).

4. The method according to any one of the preceding claims, wherein the method further comprises:
receiving (S114) a verification of successful key replacement from the SP entity (300).

5. The method according to any one of the preceding claims, wherein the new key pair is obtained by being received from the DI wallet entity (200).

6. The method according to any of claims 1 to 4, wherein the new key pair is obtained by being generated by the communication device (100).

7. The method according to any one of the preceding claims, wherein the attributes of the verifiable credentials comprise a device identifier of the communication device (100), a device identifier of the DI wallet entity (200), and either a public key of the new key pair or an indication that the new key pair is to be generated by the communication device (100).

8. The method according to any one of the preceding claims, wherein the communication device (100) utilizes either an ISO/IEC18013-5 protocol, an ISO/IEC18013-7 protocol, or an OpenID4VP protocol for communication with the DI wallet entity (200).

9. A method for key replacement in a communication device (100), wherein the method is performed by a Digital Identity, DI, wallet entity (200), and wherein the method comprises:
receiving (S208) one or more verifiable credentials from a Trust Service Provider, TSP, entity (400);
receiving (S212) a request from the communication device (100) for a verifiable presentation for the communication device (100) to perform the key replacement of a key pair;
sending (S214) a verifiable presentation comprising attributes of the verifiable credentials to the communication device (100); and
reporting (S220) successful key replacement of the key pair with a new key pair and sending a new public key of the new key pair to the SP entity (300).

10. The method according to claim 9, wherein the method further comprises:
receiving (S202) a device identifier of the communication device (100) from the communication device (100).

11. The method according to claim 9 or 10, wherein the method further comprises:
sending (S204) the device identifier to a Service Provider, SP, entity (300) and requesting a service as providable by the communication device (100) for the SP entity (300); and
receiving (S206) a token for key replacement from the SP entity (300), and wherein the verifiable credentials are received in response to the DI wallet entity (200) having sent the token in a request to the TSP entity (400).

12. The method according to any of claims 9 to 11, wherein the method further comprises:
providing (S210) a trigger for the communication device (100) to perform the key replacement.

13. The method according to any of claims 9 to 12, wherein the method further comprises:
receiving (S216) an acknowledgement of key replacement by the communication device (100).

14. The method according to any of claims 9 to 13, wherein the method further comprises:
obtaining (S218) the new public key of the new key pair.

15. The method according to claim 14, wherein the new public key of the new key pair is obtained by the new key pair being generated by the DI wallet entity (200).

16. The method according to claim 14, wherein the new public key of the new key pair is obtained by being received from the communication device (100).

17. The method according to any of claims 9 to 16, wherein the attributes of the verifiable credentials comprise a device identifier of the communication device (100), a device identifier of the DI wallet entity (200), and either a public key of the new key pair or an indication that the new key pair is to be generated by the communication device (100).

18. The method according to any of claims 9 to 17, wherein the DI wallet entity (200) utilizes either an ISO/IEC18013-5 protocol, an ISO/IEC18013-7 protocol, or an OpenID4VP protocol for communication with the communication device (100).

19. A method for key replacement in a communication device (100), wherein the method is performed by a Service Provider, SP, entity (300), and wherein the method comprises:
receiving (S306) a report of successful key replacement of a key pair at the communication device (100) and a new public key of the key pair from a Digital Identity, DI, wallet entity (200);
replacing (S310) a public key of a key pair at the SP entity (300) with the new public key; and
communicating (S312) with the communication device (100), wherein the new public key is used as part of the SP entity (300) communicating with the communication device (100).

20. The method according to claim 19, wherein the method further comprises:
receiving (S302) a device identifier of the communication device (100) and a request for the service from the DI wallet entity (200); and
sending (S304) a token for key replacement to the DI wallet entity (200).

21. The method according to claim 19 or 20, wherein the method further comprises:
verifying (S308) successful key replacement to the communication device (100) upon having received a report of successful key replacement of a key pair at the communication device (100).

22. A communication device (100) for key replacement, the communication device (100) comprising processing circuitry (210), the processing circuitry being configured to cause the communication device (100) to:
receive a trigger for the communication device (100) to perform the key replacement;
provide a request to a Digital Identity, DI, wallet entity (200) for a verifiable presentation for the communication device (100) to perform the key replacement;
receive the verifiable presentation from the DI wallet entity (200), wherein the verifiable presentation comprises attributes of one or more verifiable credentials;
obtain a new key pair, and replacing an existing key pair with the new key pair upon the communication device (100) having successfully verified the verifiable presentation; and
communicate with a Service Provider, SP, entity (300), wherein the new key pair is used as part of the communication device (100) communicating with the SP entity (300).

23. A Digital Identity, DI, wallet entity (200) for key replacement in a communication device (100), the DI wallet entity (200) comprising processing circuitry (310), the processing circuitry being configured to cause the DI wallet entity (200) to:
receive one or more verifiable credentials from a Trust Service Provider, TSP, entity (400);
receive a request from the communication device (100) for a verifiable presentation for the communication device (100) to perform the key replacement of a key pair;
send a verifiable presentation comprising attributes of the verifiable credentials to the communication device (100); and
report successful key replacement of the key pair with a new key pair and sending a new public key of the new key pair to the SP entity (300).

24. A Service Provider, SP, entity (300) for key replacement in a communication device (100), the SP entity (300) comprising processing circuitry (410), the processing circuitry being configured to cause the SP entity (300) to:
receive a report of successful key replacement of a key pair at the communication device (100) and a new public key of the key pair from a Digital Identity, DI, wallet entity (200);
replace a public key of a key pair at the SP entity (300) with the new public key; and
communicate with the communication device (100), wherein the new public key is used as part of the SP entity (300) communicating with the communication device (100).

25. A system (10) comprising a communication device (100) according to claim 22, a DI wallet entity (200) according to claim 23, and an SP entity (300) according to claim 24.

26. A computer program (1620a) for key replacement in a communication device (100), the computer program comprising computer code which, when run on processing circuitry (210) of the communication device (100), causes the communication device (100) to:
receive (S104) a trigger for the communication device (100) to perform the key replacement;
provide (S106) a request to a Digital Identity, DI, wallet entity (200) for a verifiable presentation for the communication device (100) to perform the key replacement;
receive (S108) the verifiable presentation from the DI wallet entity (200), wherein the verifiable presentation comprises attributes of one or more verifiable credentials;
obtain (S110) a new key pair, and replacing an existing key pair with the new key pair upon the communication device (100) having successfully verified the verifiable presentation; and
communicate (S116) with a Service Provider, SP, entity (300), wherein the new key pair is used as part of the communication device (100) communicating with the SP entity (300).

27. A computer program (1620b) for key replacement in a communication device (100), the computer program comprising computer code which, when run on processing circuitry (310) of a Digital Identity, DI, wallet entity (200), causes the Digital Identity, DI, wallet entity (200) to:
receive (S208) one or more verifiable credentials from a Trust Service Provider, TSP, entity (400);
receive (S212) a request from the communication device (100) for a verifiable presentation for the communication device (100) to perform the key replacement of a key pair;
send (S214) a verifiable presentation comprising attributes of the verifiable credentials to the communication device (100); and
report (S220) successful key replacement of the key pair with a new key pair and sending a new public key of the new key pair to the SP entity (300).

28. A computer program (1620c) for key replacement in a communication device (100), the computer program comprising computer code which, when run on processing circuitry (410) of a Service Provider, SP, entity (300), causes the SP entity (300) to:
receive (S306) a report of successful key replacement of a key pair at the communication device (100) and a new public key of the key pair from a Digital Identity, DI, wallet entity (200);
replace (S310) a public key of a key pair at the SP entity (300) with the new public key; and
communicate (S312) with the communication device (100), wherein the new public key is used as part of the SP entity (300) communicating with the communication device (100).

29. A computer program product (1610a, 1610b, 1610c) comprising a computer program (1620a, 1620b, 1620c) according to at least one of claims 26, 27 and 28, and a computer readable storage medium (1630) on which the computer program is stored.
1. A method for key replacement in a communication device (100), wherein the method is performed by the communication device (100), and wherein the method comprises:
receiving (S104) a trigger for the communication device (100) to perform the key replacement;
providing (S106) a request to a Digital Identity, DI, wallet entity (200) for a verifiable presentation for the communication device (100) to perform the key replacement;
receiving (S108) the verifiable presentation from the DI wallet entity (200), wherein the verifiable presentation comprises attributes of one or more verifiable credentials;
receiving a new key pair from the DI wallet entity (200);
replacing an existing key pair with the new key pair upon the communication device (100) having successfully verified the verifiable presentation; and
communicating (S116) with a Service Provider, SP, entity (300), wherein the new key pair is used as part of the communication device (100) communicating with the SP entity (300).
2. The method according to claim 1, wherein the method further comprises:
sending (S102) a device identifier of the communication device (100) to the DI wallet entity (200).
3. The method according to any one of the preceding claims, wherein the method further comprises:
sending (S112) an acknowledgement of the key replacement to the DI wallet entity (200).
4. The method according to any one of the preceding claims, wherein the method further comprises:
receiving (S114) a verification of successful key replacement from the SP entity (300).
5. The method according to any one of the preceding claims, wherein the communication device (100) utilizes either an ISO/IEC18013-5 protocol, an ISO/IEC18013-7 protocol, or an OpenID4VP protocol for communication with the DI wallet entity (200).
6. A method for key replacement in a communication device (100), wherein the method is performed by a Digital Identity, DI, wallet entity (200), and wherein the method comprises:
receiving (S208) one or more verifiable credentials from a Trust Service Provider, TSP, entity (400);
receiving (S212) a request from the communication device (100) for a verifiable presentation for the communication device (100) to perform the key replacement of a key pair;
sending (S214) a verifiable presentation comprising attributes of the verifiable credentials to the communication device (100);
generating a new key pair to obtain a new public key of the new key pair; and
reporting (S220) successful key replacement of the key pair with the new key pair and sending the new public key of the new key pair to the SP entity (300).
7. The method according to claim 6, wherein the method further comprises:
receiving (S202) a device identifier of the communication device (100) from the communication device (100).
8. The method according to any of claims 6 to 7, wherein the method further comprises:
providing (S210) a trigger for the communication device (100) to perform the key replacement.
9. The method according to any of claims 6 to 8, wherein the method further comprises:
receiving (S216) an acknowledgement of key replacement by the communication device (100).
10. The method according to any of claims 6 to 9, wherein the DI wallet entity (200) utilizes either an ISO/IEC18013-5 protocol, an ISO/IEC18013-7 protocol, or an OpenID4VP protocol for communication with the communication device (100).
11. A communication device (100) for key replacement, the communication device (100) comprising processing circuitry (210), the processing circuitry being configured to cause the communication device (100) to:
receive a trigger for the communication device (100) to perform the key replacement;
provide a request to a Digital Identity, DI, wallet entity (200) for a verifiable presentation for the communication device (100) to perform the key replacement;
receive the verifiable presentation from the DI wallet entity (200), wherein the verifiable presentation comprises attributes of one or more verifiable credentials;
receive a new key pair from the DI wallet entity (200);
replace an existing key pair with the new key pair upon the communication device (100) having successfully verified the verifiable presentation; and
communicate with a Service Provider, SP, entity (300), wherein the new key pair is used as part of the communication device (100) communicating with the SP entity (300).
12. A Digital Identity, DI, wallet entity (200) for key replacement in a communication device (100), the DI wallet entity (200) comprising processing circuitry (310), the processing circuitry being configured to cause the DI wallet entity (200) to:
receive one or more verifiable credentials from a Trust Service Provider, TSP, entity (400);
receive a request from the communication device (100) for a verifiable presentation for the communication device (100) to perform the key replacement of a key pair;
send a verifiable presentation comprising attributes of the verifiable credentials to the communication device (100);
generate a new key pair to obtain a new public key of the new key pair; and
report successful key replacement of the key pair with the new key pair and sending the new public key of the new key pair to the SP entity (300).
13. A system (10) comprising a communication device (100) according to claim 11, a DI wallet entity (200) according to claim 12, and an SP entity (300), wherein the SP entity (300) comprises processing circuitry (410), the processing circuitry being configured to cause the SP entity (300) to:
receive a report of successful key replacement of a key pair to a new public key pair at the communication device (100) and a new public key of the new key pair from the Digital Identity, DI, wallet entity (200);
replace a public key of a key pair at the SP entity (300) with the new public key; and
communicate with the communication device (100), wherein the new public key is used as part of the SP entity (300) communicating with the communication device (100).
14. A computer program (1620a) for key replacement in a communication device (100), the computer program comprising computer code which, when run on processing circuitry (210) of the communication device (100), causes the communication device (100) to:
receive (S104) a trigger for the communication device (100) to perform the key replacement;
provide (S106) a request to a Digital Identity, DI, wallet entity (200) for a verifiable presentation for the communication device (100) to perform the key replacement;
receive (S108) the verifiable presentation from the DI wallet entity (200), wherein the verifiable presentation comprises attributes of one or more verifiable credentials;
receive a new key pair from the DI wallet entity (200); replace an existing key pair with the new key pair upon the communication device (100) having successfully verified the verifiable presentation; and
communicate (S116) with a Service Provider, SP, entity (300), wherein the new key pair is used as part of the communication device (100) communicating with the SP entity (300).
15. A computer program (1620b) for key replacement in a communication device (100), the computer program comprising computer code which, when run on processing circuitry (310) of a Digital Identity, DI, wallet entity (200), causes the Digital Identity, DI, wallet entity (200) to:
receive (S208) one or more verifiable credentials from a Trust Service Provider, TSP, entity (400);
receive (S212) a request from the communication device (100) for a verifiable presentation for the communication device (100) to perform the key replacement of a key pair;
send (S214) a verifiable presentation comprising attributes of the verifiable credentials to the communication device (100);
generating a new key pair to obtain a new public key of the new key pair; and
report (S220) successful key replacement of the key pair with the new key pair and sending the new public key of the new key pair to the SP entity (300).
